# EUROPÄISCHE PATENTANMELDUNG

(11) **EP 4 067 810 A1**
(43) Veröffentlichungstag der Anmeldung: **05.10.2022**
(21) Anmeldenummer: 22162363.0
(22) Anmeldetag: 16.03.2022
(51) Int. Cl.: G01B 11/14, G01B 21/04, H01R 43/05, H01R 43/28, H01R 9/05, H01R 24/38, H01R 43/04, H02G 1/12

(54) **VERFAHREN UND VORRICHTUNG ZUM BEARBEITEN EINES KABELS**

(30) Priorität: 31.03.2021 DE 102021108215
(71) Anmelder: MD Elektronik GmbH, 84478 Waldkraiburg (DE)
(72) Erfinder: Oberreitmeier, Georg, 84562 Mettenheim (DE); Lang, Walter, 84478 Waldkraiburg (DE); Obergrußberger, Peter, 84494 Niedertaufkirchen (DE)

(57) **Zusammenfassung**

Die vorliegende Erfindung umfasst ein Verfahren zum Bearbeiten eines Kabels (1), insbesondere Koaxialkabels, das zumindest einen Innenleiter (2) und eine den Innenleiter (2) umgebende Schirmung (3) aufweist, wobei das Verfahren zumindest folgende Schritte aufweist: Umschlagen der Schirmung (3) an einem Kabelendstück (4) und weg vom Kabelendstück (4); Einführen des Kabelendstücks (4) in eine Anschlaghülse (5), wobei der Innenleiter (2) durch die Anschlaghülse (5) hindurchgeführt wird, während die umgeschlagene Schirmung (3) mit einer Stirnseite (6) an eine Wandung (7) der Anschlaghülse (5) gedrückt wird; Verbinden des freigelegten Innenleiters (2) mit einem Innenleiterkontakt (8), während das Kabelendstück (4) in der Anschlaghülse (5) angeordnet ist; Messen eines größten Abstandes (a), den ein vom Kabelendstück (4) abgewandtes Ende (9) des Innenleiterkontakts (8) zur Stirnseite (6) der Schirmung (3) aufweist, während das Kabelendstück (4) in der Anschlaghülse (5) angeordnet ist. Darüber hinaus umfasst die Erfindung eine Vorrichtung zum Durchführen eines solchen Verfahrens.

## Beschreibung

### Technisches Gebiet

Die Erfindung betrifft ein Verfahren zum Bearbeiten eines Kabels, insbesondere eines Koaxialkabels. Darüber hinaus betrifft die Erfindung eine Vorrichtung, mit der das erfindungsgemäße Verfahren durchführbar ist.

### Stand der Technik

Aufgrund der zunehmenden Digitalisierung von Komponenten und Systemen und der damit verbundenen steigenden Menge an zu übertragenden Daten ist ein zunehmender Anstieg der Anforderungen an die zur Übertragung benötigten elektrischen Leitungen zu beobachten. Um diesen Anforderungen gerecht zu werden, kommen Hochfrequenzkabel, wie beispielsweise Koaxialkabel zum Einsatz. Insbesondere bei Koaxialkabeln kann durch die koaxiale Anordnung von Innenleiter, Dielektrikum und Schirmung eine hohe Übertragungsqualität von Signalen bei geringer Dämpfung und geringer Störanfälligkeit sichergestellt werden, sofern der koaxiale Aufbau des Kabels über die gesamte Kabellänge möglichst konstant bleibt. Problematisch sind in diesem Zusammenhang jedoch häufig die Kabelenden, an denen in aller Regel Steckverbinder montiert werden, um das Kabel mit den Komponenten verbinden zu können, zwischen denen eine Datenübertragung erfolgen soll.

Um durch die Montage der Steckverbinder am Kabel möglichst wenig Störstellen zu erzeugen, die zu Übertragungsverlusten führen können, müssen daher immer kleiner werdende Toleranzbereiche eingehalten werden. Gleichzeitig steht dem jedoch eine möglichst kosteneffektive Herstellung eines solchen Kabels mit entsprechenden Steckverbindern gegenüber. Es besteht somit nicht nur ein Bedarf an Fertigungsverfahren und entsprechenden Vorrichtungen zur Umsetzung dieser Fertigungsverfahren, die möglichst präzise Kabel mit entsprechenden Steckverbindern ermöglichen. Vielmehr besteht ebenso ein hoher Bedarf an entsprechenden Fertigungsverfahren und dafür vorgesehene Vorrichtungen, die trotz der höheren Anforderung an Präzision möglichst hohe Stückzahlen bei nur geringem Ausschuss in Bezug auf die Anzahl der verarbeiteten Kabel erzielen können.

### Beschreibung der Erfindung

Es ist daher eine Aufgabe der vorliegenden Erfindung ein Verfahren bereitzustellen, das eine möglichst präzise Bearbeitung eines Kabels ermöglicht und gleichzeitig eine hohe Stückzahl an bearbeiteten Kabeln bei geringem Ausschuss sichergestellt bleibt. Es ist eine weitere Aufgabe der Erfindung eine Vorrichtung zum Durchführen eines solchen Verfahrens bereitzustellen.

Die erfindungsgemäßen Aufgaben werden durch ein Verfahren zum Bearbeiten eines Kabels sowie eine Vorrichtung zum Durchführen dieses Verfahrens mit den Merkmalen der unabhängigen Ansprüche gelöst. Weitere vorteilhafte Ausgestaltungsformen der Erfindung lassen sich den Unteransprüchen, der Beschreibung sowie den Zeichnungen entnehmen.

Ein erfindungsgemäßes Verfahren ist zum Bearbeiten eines Kabels, das zumindest einen Innenleiter und eine den Innenleiter umgebende Schirmung aufweist, geeignet. Bevorzugt handelt es sich bei dem Kabel um ein Koaxialkabel. Das Verfahren weist zumindest einen Schritt des Umschlagens der Schirmung an einem Kabelendstück auf. Das Kabelendstück kann dadurch einen Bereich aufweisen, in dem die unter der Schirmung liegenden Schichten freigelegt werden. Die Schirmung wird dabei bevorzugt entlang einer Haupterstreckungsrichtung des Kabels und weg vom Kabelendstück umgeschlagen. Das Umschlagen der Schirmung kann beispielweise durch eine oder mehrere rotierende Bürsten erfolgen, zwischen denen das Kabelendstück angeordnet wird. Die Haupterstreckungsrichtung des Kabels erstreckt sich bevorzugt entlang längsten Seite des Kabels. Das Verfahren weist weiterhin einen Schritt des Einführens des Kabelendstücks in eine Anschlaghülse auf. Der Innenleiter wird dabei durch die Anschlaghülse hindurchgeführt, während die umgeschlagene Schirmung mit einer Stirnseite an eine Wandung der Anschlaghülse gedrückt wird. Unter dem Hindurchführen des Innenleiters durch die Anschlaghülse kann in diesem Zusammenhang verstanden werden, dass der Innenleiter durch die Anschlaghülse in eine Position gebracht wird, die sich zumindest teilweise außerhalb der Anschlagschlaghülse oder außerhalb eines Raumes der von der Anschlaghülse umschlossen wird befindet. Die Wandung ist vorzugsweise senkrecht zu einer Mittelachse der Anschlaghülse angeordnet. Besonders bevorzugt weist die Anschlaghülse eine Durchgangsöffnung auf, durch die der Innenleiter aus der Anschlaghülse herausragt, während die Schirmung mit der Stirnseite an die Wandung anschlägt. Die Wandung kann dabei die Durchgangsöffnung ringförmig umgeben. Unter der Stirnseite der Schirmung kann eine Seite verstanden werden, die nach dem Umschlagen der Schirmung senkrecht zur Haupterstreckungsrichtung des Kabels verläuft.

Das erfindungsgemäße Verfahren weist weiterhin den Schritt des Verbindens des freigelegten Innenleiters mit einem Innenleiterkontakt auf. Der Schritt erfolgt dabei während das Kabelendstück in der Anschlaghülse angeordnet ist, also bevorzugt nach dem Schritt des Einführens. Die Verbindung zwischen Innenleiter und Innenleiterkontakt kann beispielsweise mit einem Crimpwerkzeug erfolgen. Darüber hinaus weist das erfindungsgemäße Verfahren einen Schritt des Messens auf, der sich bevorzugt an den Schritt des Verbindens anschließt. Während des Schrittes des Messens wird ein größter Abstand, den ein vom Kabelendstück abgewandtes Ende des Innenleiterkontakts zur Stirnseite der Schirmung aufweist, ermittelt. Das Kabelendstück bleibt während des Schrittes des Messens innerhalb der Anschlaghülse angeordnet. Es ist dabei von Vorteil, wenn nach dem Schritt des Einführens und bis zum Schritt des Messens die Stirnseite der Schirmung mit konstanter Kraft gegen die Wandung gedrückt wird.

Das erfindungsgemäße Verfahren bietet den Vorteil, dass eine besonders effiziente Positionierung des Kabelendstücks gegenüber dem Innenleiterkontakt, welcher mit dem Innenleiter verbunden wird, zu ermöglichen. Auf diese Weise kann nicht nur die Position des Innenleiters zum Innenleiterkontakt sichergestellt werden. Darüber hinaus ist es möglich den Abstand, den das Ende des Innenleiterkontakts, das dem Kabelendstück abgewandt ist, zur Stirnseite der Schirmung aufweist, auf einfache Weise zu definieren. Da das Kabelendstück während des Schrittes des Messens in der Anschlaghülse positioniert bleibt, können zusätzliche Positionierungsmaßnahmen vermieden werden, was mögliche Fehlerquellen reduziert und damit die Toleranzkette verkürzt.

Das Kabel kann zumindest eine zwischen dem Innenleiter und der Schirmung angeordnete Zwischenschicht, insbesondere ein Dielektrikum aufweisen. Die Zwischenschicht kann vorzugsweise nach dem Schritt des Einführens zumindest abschnittsweise am Kabelendstück entfernt werden, so dass der Innenleiter von der Zwischenschicht freigelegt wird. Besonders bevorzugt wird die Zwischenschicht in einem Bereich des Kabelendstücks entfernt der durch die Anschlaghülse hindurchgeführt und damit außerhalb der Anschlaghülse angeordnet ist. Somit kann nicht nur auf einfache Weise der Innenleiter von der Zwischenschicht abisoliert werden. Vielmehr kann auch der Abstand des abisolierten Innenleiters zur Stirnseite prozesssicher eingehalten werden.

Die Anschlaghülse kann nach dem Schritt des Einführens und vor dem Schritt des Verbindens in zumindest einer ersten Richtung bewegt werden. Bevorzugt verläuft die erste Richtung senkrecht zu einer Haupterstreckungsrichtung des Kabels. Weiterhin ist bevorzugt, dass das Kabelendstück während der Bewegung in der ersten Richtung in der Anschlaghülse eingeführt bleibt. Somit kann sichergestellt werden, dass das Kabelendstück auch zwischen den einzelnen Verfahrensschritten korrekt positioniert bleibt.

Nach dem Schritt des Einführens und vor dem Schritt des Verbindens kann ein Schritt des Kürzens des Innenleiters erfolgen. Sofern das Kabel eine Zwischenschicht aufweist, erfolgt der Schritt des Kürzens bevor die Zwischenschicht im Bereich des Kabelendstücks entfernt wurde. In diesem Fall ist bevorzugt, dass die Zwischenschicht gemeinsam mit dem Innenleiter gekürzt wird. Das Kürzen kann beispielsweise erfolgen, indem ein Teil des Innenleiters und der Zwischenschicht abgeschnitten wird. Durch das Kürzen des Innenleiters kann zum einen eine definierte Länge des freiliegenden Innenleiters, welcher mit dem Innenleiterkontakt verbunden werden soll sichergestellt werden. Zum anderen kann ein Abstand, den ein Ende des Innenleiters, das der Stirnseite abgewandt ist, zur Stirnseite aufweist auf einfache Weise definiert werden. Es ist daher bevorzugt, dass das Kabelendstück auch während des Schrittes des Kürzens in der Anschlaghülse angeordnet bleibt.

Der Innenleiterkontakt kann, beispielsweise zur einfacheren Zuführung, mit einem Trägerstreifen verbunden sein, wobei während des Schrittes des Verbindens ein Schritt des Abtrennens des Innenleiterkontakts vom Trägerstreifen erfolgen kann. Bevorzugt erfolgt der Schritt des Abtrennens vor dem Schritt des Messens. Noch bevorzugter beginnt der Schritt des Abtrennens nachdem der Schritt des Verbindens begonnen hat, wobei der Schritt des Abtrennens bevorzugt abgeschlossen ist, bevor der Schritt des Verbindens abgeschlossen ist. Das Abtrennen kann beispielsweise durch Abscheren erfolgen.

Die Anschlaghülse kann während des Schrittes des Verbindens und vor und/oder während des Schrittes des Abtrennens bewegt werden. Bevorzugt erfolgt die Bewegung dabei in die erste Richtung. Darüber hinaus kann das Lösen des Innenleiterkontakts von dem Trägerstreifen während des Schrittes des Abtrennens durch das Bewegen der Anschlaghülse in die erste Richtung erfolgen. Das Abtrennen erfolgt bevorzugt durch ein Abscheren. Beispielsweise kann durch die Bewegung der Anschlaghülse in die erste Richtung eine Scherkraft auf eine Stelle zwischen Innenleiterkontakt und Trägerstreifen erzeugt werden, die den Innenleiterkontakt von dem Trägerstreifen löst.

Die Anschlaghülse kann zumindest eine an die Wandung angrenzende Seitenöffnung aufweisen. Bevorzugt ist die Seitenöffnung in einem Hülsenmantel der Anschlaghülse eingebracht. Weiterhin ist bevorzugt, dass mehrere Seitenöffnungen vorgesehen sind, die spiegelsymmetrisch zueinander angeordnet sein können. Der Schritt des Messens kann mithilfe einer optischen Messeinrichtung, insbesondere einer Kamera erfolgen. Die optische Messeinrichtung ist dabei bevorzugt zumindest auf die Seitenöffnung und das vom Kabelendstück abgewandte Ende des Innenleiterkontakts gerichtet. Da die Seitenwandung an die Wandung angrenzt, kann die optische Messeinrichtung somit durch die Seitenwandung die an die Wandung angedrückte Stirnseite der Schirmung erfassen und den größten Abstand zum Ende des Innenleiterkontaktes, das dem Kabelendstück abgewandt ist, ermitteln.

Vor dem Schritt des Umschlagens kann eine Kabelhülse am Kabel befestigt werden. Die Kabelhülse kann dabei entweder im Bereich der Schirmung oder im Bereich eines Mantels des Kabels, welcher die Schirmung umgibt, angeordnet werden. Weiterhin ist es bevorzugt, dass die Schirmung während des Schrittes des Umschlagens zumindest teilweise über die Kabelhülse gestülpt wird.

Neben dem beschriebenen Verfahren umfasst die erfindungsgemäße Lösung eine Vorrichtung zur Durchführung des erfindungsgemäßen Verfahrens. Die erfindungsgemäße Vorrichtung weist zumindest eine Anschlaghülse auf. Die Anschlaghülse weist eine Durchgangsöffnung und eine die Durchgangsöffnung umlaufende Wandung auf, so dass der Innenleiter durch die Durchgangsöffnung hindurchführbar und die Stirnseite an die Wandung andrückbar ist. Weiterhin umfasst die erfindungsgemäße Vorrichtung zumindest eine Verbindungsstation, in der der Schritt des Verbindens des Innenleiters mit dem Innenleiterkontakt durchführbar ist. Darüber hinaus weist die erfindungsgemäße Vorrichtung zumindest einer Messstation auf, in der der Schritt des Messens des größten Abstandes, den das vom Kabelendstück abgewandte Ende des Innenleiterkontakts zur Stirnseite der Schirmung aufweist, durchführbar ist. Die Messstation kann beispielsweise eine optische oder mechanische Messeinrichtung aufweisen, um den entsprechenden Abstand zu ermitteln. Die Anschlaghülse ist dabei mit einem in der Anschlaghülse angeordneten Kabelendstück zumindest zwischen der Verbindungsstation und der Messstation bewegbar.

Bevorzugt weist die erfindungsgemäße Vorrichtung weiterhin eine Umschlagstation auf, in der die Schirmung des Kabelendstücks umgeschlagen wird und eine Einführstation auf, in der das Kabelendstück in die Anschlaghülse eingeführt wird. Die Umschlagstation kann beispielsweise ein Weitungselement, das die Schirmung weitet und/oder rotierende Bürsten aufweisen, die die Schirmung umschlagen. Besonders bevorzugt passiert das Kabelendstück zuerst die Umschlagstation und die Einführstation, bevor es in die Anschlaghülse eingeführt wird. Im Anschluss kann die Anschlaghülse mit darin angeordneten Kabel in die Messstation eingebracht werden. Alternativ kann die Anschlaghülse bereits in der Messstation angeordnet sein, wenn das Kabelendstück in die Anschlaghülse eingeführt wird. Die Anschlaghülse kann mit darin angeordneten Kabelendstück vor Erreichen der Verbindungsstation in eine Kürzungsstation bewegt werden, in der der freiliegende Innenleiter gekürzt wird. Alternativ kann das Kürzen des Innenleiters auch in der Messstation erfolgen. Sofern das Kabel eine Zwischenschicht aufweist, kann der Innenleiter gemeinsam mit der Zwischenschicht gekürzt werden.

Die Anschlaghülse kann in der zwischen einer ersten Arbeitsposition und einer zweiten Arbeitsposition bewegbar sein. Bevorzugt ist die erste Arbeitsposition in der Messstation und die zweite Arbeitsposition in der Verbindungsstation angeordnet. Bevorzugt wird die Anschlaghülse beim Bewegen zwischen der ersten und der zweiten Arbeitsposition in einer Bewegungsrichtung, die insbesondere der zweiten Richtung entsprechen kann, bewegt.

Die Messstation kann im Bereich der ersten Arbeitsposition ein Konfektionerwerkzeug aufweisen. Das Konfektionierwerkzeug kann vorgesehen sein, um die Zwischenschicht vom Innenleiter am Kabelendstück abzuisolieren. Alternativ oder zusätzlich kann das Konfektionierwerkzeug vorgesehen sein, um den Innenleiter im Bereich des Kabelendstücks zu kürzen. Vorzugsweise wird mithilfe des Konfektionierwerkzeugs zuerst der Innenleiter zusammen mit der Zwischenschicht gekürzt, wobei im Anschluss die Zwischenschicht vom Innenleiter abschnittsweise abisoliert wird.

Die Verbindungsstation kann im Bereich der zweiten Arbeitsposition ein Verbindungswerkzeug zum Verbinden des Innenleiterkontakts mit dem Innenleiter aufweisen. Das Verbindungswerkzeug kann beispielsweise als Crimpwerkzeug ausgeführt sein. Bevorzugt ist das Verbindungswerkzeug dafür vorgesehen den Innenleiterkontakt mit dem, insbesondere freigelegten, also auch abisolierten, Innenleiter mechanisch zu verbinden.

Weiterhin kann die Verbindungsstation im Bereich der zweiten Arbeitsposition ein Halteelement zum Halten eines mit dem Innenleiterkontakt verbundenen Trägerstreifens aufweisen. Das Halteelement kann zum Verbindungswerkzeug derart angeordnet sein, dass der Innenleiterkontakt durch eine Bewegung der Anschlaghülse in die zweite Arbeitsposition von dem Trägerstreifen abgetrennt wird. Das Abtrennen kann beispielsweise durch ein Abscheren des Innenleiterkontaks vom Trägerstreifen erfolgen. Besonders bevorzugt erfolgt dies, indem das Halteelement, in oder an dem der Trägerstreifen befestigt ist relativ zu dem Verbindungswerkzeug bewegt wird an dem bevorzugt der Innenleiterkontakt angeordnet ist. Diese Bewegung erfolgt dabei bevorzugt senkrecht zu einer Längserstreckungsrichtung des Innenleiterkontakts.

Die Verbindungsstation kann eine Positioniereinrichtung aufweisen, wobei der Innenleiterkontakt mithilfe der Positioniereinrichtung in einer ersten und einer zweiten Dimension gegenüber dem Innenleiter positionierbar ist. Die Positionierung des Innenleiters erfolgt bevorzugt vor dem Schritt des Verbindens. Die erste Dimension verläuft dabei bevorzugt senkrecht zur zweiten Dimension. Weiterhin ist bevorzugt, dass die Position des Innenleiterkontakts gegenüber dem Innenleiter sowohl in der ersten als auch in der zweiten Dimension einstellbar ist.

Die Anschlaghülse kann eine Stelleinrichtung aufweisen, mit deren Hilfe der Innenleiter in einer dritten Dimension gegenüber dem Innenleiterkontakt positionierbar ist. Auch diese Positionierung erfolgt bevorzugt vor dem Schritt des Verbindens. Die dritte Dimension ist vorzugsweise senkrecht zur ersten Dimension und senkrecht zur zweiten Dimension angeordnet. Weiterhin handelt es sich bei der dritten Dimension vorzugsweise um den Abstand, den die Anschlaghülse zum, insbesondere positionierten, Innenleiterkontakt aufweist. Die Stelleinrichtung kann beispielsweise ein Feingewinde umfassen, mit dem eine stufenlose Einstellung der Position des Innenleiters gegenüber dem Innenleiterkontakt entlang der dritten Dimension ermöglicht wird.

Die Erfindung wurde mit Bezug auf ein Verfahren sowie eine Vorrichtung beschrieben. Sofern nichts anderes angegeben ist, sind die Ausführungen zum Verfahren analog auf die Vorrichtung anwendbar. Dasselbe gilt natürlich in der umgekehrten Richtung, so dass auch die Ausgestaltungen der Vorrichtung ihren Niederschlag im Verfahren finden.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigen:
- Figur 1: ein Ablaufschema eines erfindungsgemäßen Verfahrens gemäß einer ersten Ausführungsform; und
- Figuren 2 bis 11: das erfindungsgemäße Verfahren gemäß der ersten Ausführungsform und Teile einer Ausführungsform der erfindungsgemäßen Vorrichtung in mehreren Verfahrensschritten.

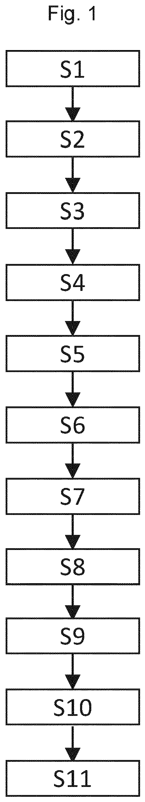

Figur 1 zeigt ein Ablaufschema einer Ausführungsform des erfindungsgemäßen Verfahrens. In der vorliegenden Ausführungsform erfolgt die Durchführung des Verfahrens mit einer erfindungsgemäßen Vorrichtung zur Durchführung des erfindungsgemäßen Verfahrens. Im ersten Verfahrensschritt S1 wird ein Kabel in Form eines Koaxialkabels bereitgestellt. Das Koaxialkabel besitzt hierbei einen elektrisch leitenden Innenleiter, eine den Innenleiter umgebende Zwischenschicht in Form eines Dielektrikums sowie eine Schirmung. Die Schirmung umgibt das Dielektrikum und besteht aus einem elektrisch leitfähigen Drahtgeflecht. Die Schirmung ist von einem Mantel umgeben, der die Schirmung vor äußeren Umwelteinflüssen schützt.

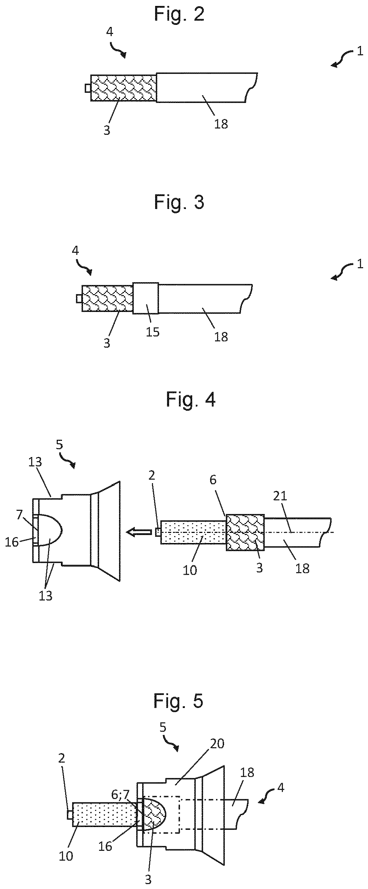

Nach dem Bereitstellen des Kabels 1 wird in einem folgenden Verfahrensschritt S2 an einem Kabelendstück 4 ein Teil des Mantels 18 entfernt, so dass die Schirmung 3 am Kabelendstück 4 freigelegt wird. In Figur 2 ist das Kabelendstück 4 nach dem Entfernen des Mantels 18 und mit freigelegter Schirmung 3 dargestellt. Der Verfahrensschritt S2 erfolgt in der vorliegenden Ausführungsform in einer ersten Bearbeitungsstation.

Im Anschluss an Verfahrensschritt S2 wird das Kabel 1 zur nächsten Bearbeitungsstation bewegt in der in einem Verfahrensschritt S3 eine Kabelhülse 15 auf dem Mantel 18 befestigt wird. Figur 3 zeigt das Kabelendstück 4 mit einer solchen Kabelhülse 15. Die Kabelhülse 15 wurde in der gezeigten Ausführungsform auf die freiliegende Schirmung 3 gecrimpt und ist damit kraftschlüssig und formschlüssig mit dem Kabel 1 verbunden.

Im Anschluss wird das Kabel 1 in eine weitere Bearbeitungsstation bewegt, in der ein Verfahrensschritt S4 erfolgt. Während des Verfahrensschrittes S4 wird die freigelegte Schirmung 3 zuerst geweitet und anschließend parallel zu einer Haupterstreckungsrichtung 21 des Kabels 1 und vom Kabelendstück 4 weg über die Kabelhülse 15 umgeschlagen. Durch das Umschlagen der Schirmung 3 wird am Kabelendstück 4 die Zwischenschicht 10, die als Dielektrikum ausgeführt ist, freigelegt. Nachdem der Verfahrensschritt S4 durchgeführt wurde, wird das Kabelendstück 4 im nächsten Verfahrensschritt S5, wie in Figur 4 gezeigt wird, in eine Anschlaghülse 5 eingeführt. Dabei wird die Zwischenschicht 10 und der darin enthaltene Innenleiter 2 durch eine Durchgangsöffnung 16 geführt, während die Schirmung 3 mit einer Stirnseite 6 an einer Wandung 7 der Anschlaghülse 5 anschlägt. Das Anschlagen der Schirmung 3 an die Wandung 7 ist dabei in Figur 5 gezeigt. Die Schirmung 3 wird dabei mit konstanter und gleichmäßiger Kraft gegen die Wandung 7 gedrückt. Die Durchgangsöffnung 16 ist kreisförmig ausgebildet, während die Wandung 7 dabei die Durchgangsöffnung 16 ringförmig umgibt. In einen Hülsenmantel 20 der Anschlaghülse 5 sind darüber hinaus vier Seitenöffnungen 13 eingebracht, die an die Wandung 7 angrenzen, so dass das in der Anschlaghülse 5 angeordnete Kabelendstück 4 zumindest im Bereich der Wandung 7 an vier Stellen sichtbar ist. Dabei ist vor allem die umgeschlagene und an die Wandung 7 gedrückte Schirmung 3 sichtbar.

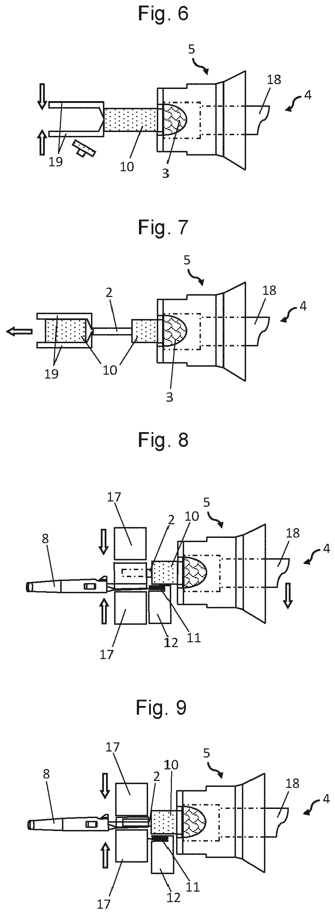

Nachdem das Kabelendstück 4 in die Anschlaghülse 5 eingeführt wurde, wird die Anschlaghülse 5 mit dem darin enthaltenden Kabelendstück 4 in eine erste Arbeitsposition innerhalb einer Messstation bewegt, in der ein Verfahrensschritt S6 erfolgt. Während des Verfahrensschrittes S6 wird der Innenleiter 2 gemeinsam mit der Zwischenschicht 10 gekürzt. Der Verfahrensschritt S6 ist in Figur 6 dargestellt. Das Kürzen des Innenleiters 2 und der Zwischenschicht 10 erfolgt dabei mithilfe einem Konfektionierwerkzeug 19. Der verbleibende Innenleiter 2 und die verbleibende Zwischenschicht 10 werden somit im Bereich des Kabelendstücks 4 auf eine definierte Länge gekürzt.

Dem Verfahrensschritt S6 schließt sich in der gezeigten Ausführungsform ein Verfahrensschritt S7 an, der in Figur 7 gezeigt ist. Hierbei wird mithilfe des Konfektionierwerkzeuges 19, mit dem in Verfahrensschritt S6 das Kürzen erfolgte, ein Teil der Zwischenschicht 10 vom Innenleiter 2 abisoliert, so dass am Kabelendstück 4 ein Abschnitt mit freiliegenden Innenleiter 2 erzeugt wird. Der Verfahrensschritt S7 kann sowohl in wie der Verfahrensschritt S6 in der ersten Arbeitsposition erfolgen, als auch in einer gesonderten Bearbeitungsstation oder Arbeitsposition durchgeführt werden, in die das Kabelendstück 4 mit der Anschlaghülse 5 vor Verfahrensschritt S7 bewegt wird.

Nach dem Verfahrensschritt S7 wird die Anschlaghülse 5 aus der ersten Arbeitsposition in eine zweite Arbeitsposition, die sich in einer Verbindungsstation befindet, bewegt. Bereits während der Bewegung in die zweite Arbeitsposition beginnt dabei ein Verfahrensschritt S8, der in Figur 8 dargestellt ist. Ein Innenleiterkontakt 8, der über einen Trägerstreifen 11 der Verbindungsstation zugeführt wird, wird über eine nicht gezeigte Positioniereinrichtung am Innenleiter 2 positioniert. Im Anschluss wird der Innenleiterkontakt 8 mithilfe eines Verbindungswerkzeugs 17 mit dem Innenleiter 2 verbunden. In der vorliegenden Ausführungsform handelt es sich bei dem Verbindungswerkzeug um ein Crimpwerkzeug, dass den Innenleiterkontakt 8 durch Umformen und Verpressen mit den Innenleiter 2 verbindet. Der Trägerstreifen 11 wird durch ein Halteelement 12 gehalten. Durch die Bewegung der Anschlaghülse 5 in die zweite Arbeitsposition und das Schließen des Verbindungswerkzeugs 17, um den Innenleiterkontakt 8 mit dem Innenleiter 2 zu verbinden, beginnt ein Verfahrensschritt S9, bei dem der Innenleiterkontakt 8 vom Trägerstreifen 11 abgetrennt wird. Das Halteelement 12 ist in unmittelbarer Nähe zum Verbindungswerkzeug 17 angeordnet, so dass durch das Schließen der Verbindungswerkzeugs 17, der Innenleiterkontakt 8 vom Trägerstreifen 11 abgeschert und damit gelöst wird. Da zu diesem Zeitpunkt der Innenleiterkontakt 8 noch nicht vollständig mit dem Innenleiter 2 verbunden ist, wird der Verfahrensschritt S9 vor dem Verfahrensschritt S8 abgeschlossen.

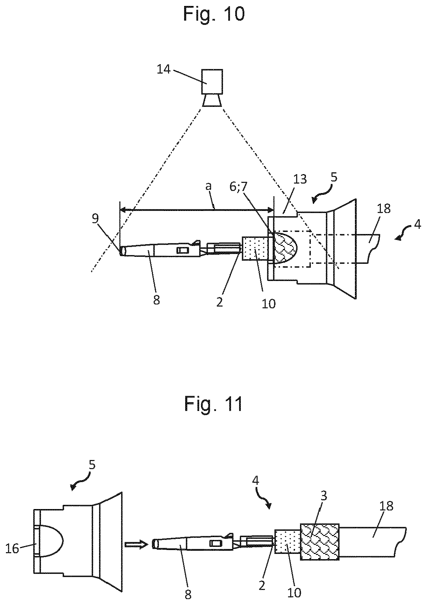

Wie in Figur 9 dargestellt, ist in der zweiten Arbeitsposition der Innenleiterkontakt 8 vom Trägerstreifen 11 getrennt und der Innenleiterkontakt 8 fest mit dem Innenleiter verbunden. Im Anschluss wird die Anschlaghülse 5 aus der zweiten Arbeitsposition zurück in die erste Arbeitsposition in der Messstation bewegt. In der Messstation erfolgt ein Verfahrensschritt S10, der in Figur 10 dargestellt ist. Eine optische Messvorrichtung 14, die in der vorliegenden Ausführungsform als Kamera ausgebildet ist, ermittelt einen Abstand a, den ein von dem Kabelendstück 8 abgewandtes Ende 9 des Innenleiterkontakts 8 zur Stirnseite 6 der Schirmung aufweist. Hierzu ist eine der Seitenöffnungen 13 der Messvorrichtung 14 zugewandt, so dass die Messvorrichtung 14 durch die Seitenwandung 13 die Stirnseite 7 der Schirmung 3 erfassen kann.

Nachdem der Abstand a ermittelt wurde, wird in der vorliegenden Ausführungsform das Kabelendstück 4 in einem Verfahrensschritt S11, der in Figur 11 gezeigt ist, aus der Anschlaghülse 5 herausgezogen. Der an dem Innenleiter 2 befestigte Innenleiterkontakt 8 wird dabei durch die Durchgangsöffnung 16 der Anschlaghülse 5 hindurchgeführt.

Die mit Bezug auf die Figuren gemachten Erläuterungen sind rein beispielhaft und nicht beschränkend zu verstehen.

### BEZUGSZEICHEN LISTE

- 1: Kabel
- 2: Innenleiter
- 3: Schirmung
- 4: Kabelendstück
- 5: Anschlaghülse
- 6: Stirnseite
- 7: Wandung
- 8: Innenleiterkontakt
- 9: Ende Innenleiterkontakt
- 10: Zwischenschicht
- 11: Trägerstreifen
- 12: Halteelement
- 13: Seitenöffnung
- 14: Messeinrichtung
- 15: Kabelhülse
- 16: Durchgangsöffnung
- 17: Verbindungswerkzeug
- 18: Mantel
- 19: Konfektionierwerkzeug
- 20: Hülsenmantel
- 21: Haupterstreckungsrichtung (Kabel)

## Patentansprüche

1. Verfahren zum Bearbeiten eines Kabels (1), insbesondere eines Koaxialkabels, das zumindest einen Innenleiter (2) und eine den Innenleiter (2) umgebende Schirmung (3) aufweist, wobei das Verfahren zumindest folgende Schritte aufweist:
Umschlagen der Schirmung (3) an einem Kabelendstück (4) und weg vom Kabelendstück (4),
Einführen des Kabelendstücks (4) in eine Anschlaghülse (5), wobei der Innenleiter (2) durch die Anschlaghülse (5) hindurchgeführt wird, während die umgeschlagene Schirmung (3) mit einer Stirnseite (6) an eine Wandung (7) der Anschlaghülse (5) gedrückt wird;
Verbinden des freigelegten Innenleiters (2) mit einem Innenleiterkontakt (8), während das Kabelendstück (4) in der Anschlaghülse (5) angeordnet ist;
Messen eines größten Abstandes (a), den ein vom Kabelendstück (4) abgewandtes Ende (9) des Innenleiterkontakts (8) zur Stirnseite (6) der Schirmung (3) aufweist, während das Kabelendstück (4) in der Anschlaghülse (5) angeordnet ist.

2. Verfahren gemäß dem vorhergehenden Anspruch, wobei das Kabel (1) zumindest eine zwischen dem Innenleiter (2) und der Schirmung (3) angeordnete Zwischenschicht (10) aufweist, die nach dem Schritt des Einführens zumindest abschnittsweise am Kabelendstück (4) entfernt wird.

3. Verfahren gemäß einem der vorhergehenden Ansprüche, wobei die Anschlaghülse (5) nach dem Schritt des Einführens und vor dem Schritt des Verbindens in zumindest einer ersten Richtung bewegt wird.

4. Verfahren gemäß einem der vorhergehenden Ansprüche, wobei nach dem Schritt des Einführens und vor dem Schritt des Verbindens ein Schritt des Kürzens des Innenleiters (2) erfolgt.

5. Verfahren gemäß einem der vorhergehenden Ansprüche, wobei der Innenleiterkontakt (8) mit einem Trägerstreifen (11) verbunden ist, wobei während des Schrittes des Verbindens ein Schritt des Abtrennens des Innenleiterkontakts (8) vom Trägerstreifen (11) erfolgt.

6. Verfahren gemäß dem vorhergehenden Anspruch, wobei die Anschlaghülse (5) während des Schrittes des Verbindens und vor und/oder während des Schrittes des Abtrennens bewegt wird.

7. Verfahren gemäß dem vorhergehenden Anspruch, wobei das Lösen des Innenleiterkontakts (8) vom Trägerstreifen (11) während des Schrittes des Abtrennens durch das Bewegen der Anschlaghülse (5) in die zweite Richtung, insbesondere durch ein Abscheren, erfolgt.

8. Verfahren gemäß einem der vorhergehenden Ansprüche, wobei die Anschlaghülse (5) zumindest eine an die Wandung (7) angrenzende Seitenöffnung (13) aufweist und der Schritt des Messens mithilfe einer optischen Messeinrichtung (14), insbesondere einer Kamera erfolgt, die zumindest auf die Seitenöffnung (13) und das vom Kabelendstück (4) abgewandte Ende (9) des Innenleiterkontakts (8) gerichtet ist.

9. Verfahren gemäß einem der vorhergehenden Ansprüche, wobei vor dem Schritt des Umschlagens eine Kabelhülse (15) am Kabel (1) befestigt wird und die Schirmung (3) während des Schrittes des Umschlagens zumindest teilweise über die Kabelhülse (15) gestülpt wird.

10. Vorrichtung zur Bearbeitung eines Kabels (1) nach einem Verfahren gemäß den Ansprüchen 1 bis 9 mit:
zumindest einer Anschlaghülse (5), die eine Durchgangsöffnung (16) und eine die Durchgangsöffnung (16) umlaufende Wandung (7) aufweist, so dass der Innenleiter (2) durch die Durchgangsöffnung (16) hindurchführbar und die Stirnseite (6) an die Wandung (7) andrückbar ist,
zumindest einer Verbindungsstation, in der der Schritt des Verbindens des Innenleiters (2) mit dem Innenleiterkontakt (8) durchführbar ist,
zumindest einer Messstation, in der der Schritt des Messens des größten Abstandes (a), den das vom Kabelendstück (4) abgewandte Ende (9) des Innenleiterkontakts (8) zur Stirnseite (6) der Schirmung (3) aufweist durchführbar ist, wobei die Anschlaghülse (5) mit einem in der Anschlaghülse (5) angeordneten Kabelendstück (4) zumindest zwischen der Verbindungsstation und der Messstation bewegbar ist.

11. Vorrichtung nach dem vorhergehenden Anspruch, wobei die Anschlaghülse (5) zwischen einer ersten Arbeitsposition und einer zweiten Arbeitsposition bewegbar ist, wobei die erste Arbeitsposition in der Messstation und die zweite Arbeitsposition in der Verbindungsstation angeordnet ist.

12. Vorrichtung nach dem vorhergehenden Anspruch, wobei die Messstation im Bereich der ersten Arbeitsposition ein Konfektionierwerkzeug (19) zum Abisolieren und/oder Kürzen des Innenleiters (2) aufweist.

13. Vorrichtung nach einem der Ansprüche 11 oder 12, wobei die Verbindungsstation im Bereich der zweiten Arbeitsposition ein Verbindungswerkzeug (17) zum Verbinden des Innenleiters (2) mit dem Innenleiterkontakt (8) aufweist.

14. Vorrichtung nach dem vorhergehenden Anspruch, wobei die Verbindungsstation im Bereich der zweiten Arbeitsposition ein Halteelement (12) zum Halten eines mit dem Innenleiterkontakt (8) verbundenen Trägerstreifens (11) aufweist und das Halteelement (12) zum Verbindungswerkzeug (17) derart angeordnet ist, dass der Innenleiterkontakt (8) durch eine Bewegung der Anschlaghülse (5) in die zweite Arbeitsposition von dem Trägerstreifen (11) abgetrennt, insbesondere abgeschert, wird.

15. Vorrichtung nach einem der Ansprüche 10 bis 14, wobei die Verbindungsstation eine Positioniereinrichtung aufweist, wobei der Innenleiterkontakt (8) mithilfe der Positioniereinrichtung, insbesondere vor dem Schritt des Verbindens, in einer ersten und einer zweiten Dimension gegenüber dem Innenleiter (2) positionierbar ist.

16. Vorrichtung nach dem vorhergehenden Anspruch, wobei die Anschlaghülse (5) eine Stelleinrichtung aufweist, wobei der Innenleiter (2) mithilfe der Stelleinrichtung, insbesondere vor dem Schritt des Verbindens, in einer dritten Dimension gegenüber dem Innenleiterkontakt (8) positionierbar ist.
